# EUROPEAN PATENT APPLICATION

(11) **EP 4 756 954 A1**
(43) Date of publication of application: **10.06.2026**
(21) Application number: 25857921.8
(22) Date of filing: 09.09.2025
(51) Int. Cl.: H01M 10/04, H01M 50/105, H01M 50/211

(54) **POUCH-TYPE BATTERY CELL PRESSING MEMBER, BATTERY MODULE INCLUDING SAME, AND POUCH-TYPE BATTERY CELL PRESSING METHOD USING SAME**

(30) Priority: 30.09.2024 KR 20240132482; 02.09.2025 KR 20250124019
(71) Applicant: LG ENERGY SOLUTION, LTD., Seoul 07335 (KR)
(72) Inventor: Yun, Min Hyuk, 34122 Daejeon (KR); Oh, Sang Seung, 34122 Daejeon (KR)
(74) Representative: Goddar, Heinz J.
(86) International application number: PCT/KR2025/013948
(87) International publication number: WO 2026/071564

(57) **Abstract**

A pouch-type battery cell pressing member includes: a first pressing part including a first base plate, a first elastic member having a first end coupled to the first base plate, and a plurality of first contact portions coupled to a second end of the first elastic member, and a second pressing part including a second base plate, a second elastic portion having a first end coupled to the second base plate, and a plurality of second contact portions coupled to a second end of the second elastic portion. The plurality of first contact portions and the plurality of second contact portions define a first region where pressing surfaces are substantially parallel to the first base plate and the second base plate, and a second region where pressing surfaces are formed in an inclined shape with respect to the first base plate and the second base plate.

## Description

### [Technical Field]

This application is based on and claims priority from Korean Patent Application Nos. 10-2024-0132482 and 10-2025-0124019 filed on September 30, 2024 and September 2, 2025, with the Korean Intellectual Property Office, respectively, the disclosures of which are incorporated herein in their entireties by reference.

The present disclosure relates to a pouch-type battery cell pressing member, a battery module including the same, and a method for pressing a pouch-type battery cell using the same.

### [Background Art]

The rechargeable lithium secondary battery is not only widely used as an energy source for a wireless mobile device or a wearable device worn on the body, but also used as an energy source for an electric vehicle, a hybrid electric vehicle, and the like, which are presented as alternatives to conventional gasoline vehicles and diesel vehicles that cause air pollution.

The lithium secondary battery generates and supplies current through the migration of lithium ions in the battery during a charging and discharging process, and when smooth migration of the lithium ions does not occur, side reactions occur, which may result in negative consequences in terms of performance and safety of the secondary battery.

### [Disclosure]

### [Technical Problem]

The present disclosure provides a pouch-type battery cell pressing member that presses both a central portion and a sliding portion of an electrode assembly in the same manner so as to prevent or suppress problems caused by lithium deposition or the like in the sliding portion, a battery module including the same, and a method for pressing a pouch-type battery cell using the same.

### [Technical Solution]

A pouch-type battery cell pressing member according to the present disclosure may include: a first pressing part including a first base plate, a first elastic member having a first end coupled to the first base plate, and a plurality of first contact portions coupled to a second end of the first elastic member; and a second pressing part including a second base plate, a second elastic member having a first end coupled to the second base plate, and a plurality of second contact portions coupled to a second end of the second elastic member. The plurality of first contact portions and the plurality of second contact portions define a first region where pressing surfaces are substantially parallel to the first base plate and the second base plate, and a second region where pressing surfaces are formed in an inclined shape with respect to the first base plate and the second base plate.

In the pouch-type battery cell pressing member according to the present disclosure, in the second region, the plurality of first contact portions and the plurality of second contact portions may be formed such that an inclination angle increases toward both longitudinal ends of the first base plate or the second base plate.

In the pouch-type battery cell pressing member according to the present disclosure, lengths of the first elastic member and the second elastic member coupled to the plurality of first contact portions and the plurality of second contact portions may increase toward both longitudinal ends of the first base plate or the second base plate.

In the pouch-type battery cell pressing member according to the present disclosure, the plurality of first contact portions and the plurality of second contact portions may have elastic members coupled thereto that are arranged in two rows along a width direction of the first base plate or the second base plate.

In the pouch-type battery cell pressing member according to the present disclosure, in each second region, the number of the plurality of first contact portions and the plurality of second contact portions may be in a range of 3 to 10.

In the pouch-type battery cell pressing member according to the present disclosure, longitudinal ends of the first base plate and longitudinal ends of the second base plate may be positioned inward by more than about 0 mm to 3 mm or less from an outer periphery of the pouch-type battery cell in a direction in which electrode leads protrude.

In the pouch-type battery cell pressing member according to the present disclosure, widths of the plurality of first contact portions and the plurality of second contact portions may be about 2 mm to 5 mm.

In the pouch-type battery cell pressing member according to the present disclosure, widths of the plurality of first contact portions and the plurality of second contact portions may be about 3 mm.

In the pouch-type battery cell pressing member according to the present disclosure, lengths of the plurality of first contact portions and the plurality of second contact portions may be configured to be equal to or greater than a width of the pouch-type battery cell.

A battery module according to the present disclosure may include: a plurality of pouch-type battery cells; the pouch-type battery cell pressing member interposed between the plurality of pouch-type battery cells; and a module case accommodating the plurality of pouch-type battery cells and the pouch-type battery cell pressing assembly. The pouch-type battery cell pressing member may be interposed at one place in two or more locations among spaces between the plurality of pouch-type battery cells.

In the battery module according to the present disclosure, the pouch-type battery cell pressing member may be arranged such that an outer surface of the first base plate, to which the first elastic portion is not attached, faces an outer surface of the second base plate, to which the second elastic portion is not attached.

A pouch-type battery cell pressing method according to the present disclosure may include: providing the pouch-type battery cell pressing assembly; placing the first pressing part on an upper portion of the pouch-type battery cell and placing the second pressing part on a lower portion of the pouch-type battery cell; and pressing the first pressing part and the second pressing part toward the pouch-type battery cell. The pressing may be performed such pressing of the first region and pressing of the second region are carried out simultaneously.

In the pouch-type battery cell pressing method according to the present disclosure, the pressing may be performed by continuously pressing an entirety of the first base plate and the second base plate with a uniform force for a period of about 2 seconds or more and 10 minutes or less.

In the pouch-type battery cell pressing method according to the present disclosure, the pressing may be performed by repeating pressing and releasing pressing two or more times.

In the pouch-type battery cell pressing method according to the present disclosure, the pressing may include continuously pressing the first region with a uniform force for a period of about 2 seconds or more and 10 minutes or less, and applying vibration to the second region while in a pressed state.

In the pouch-type battery cell pressing method according to the present disclosure, the vibration may be ultrasonic vibration.

The present disclosure may also be provided in forms in which the means for solving the above problem are variously combined.

### [Advantageous Effects]

As described above, the pouch-type battery cell pressing member according to the present disclosure may press a central portion and a sliding portion of a battery cell, in which a plurality of electrodes having sliding portions are stacked, with the same force.

Accordingly, lithium deposition caused by a decrease in pressing force on the sliding portion and performance degradation of the battery cell due to an increase in resistance may be prevented or suppressed.

### [Description of Drawings]

The following drawings attached hereto illustrate embodiments of the present disclosure and serve to further understand the technical idea of the present disclosure together with the detailed description of the disclosure to be described later. Therefore, the present disclosure should not be construed as being limited to the matters illustrated in the drawings.
FIG. 1 is a front view of a pouch-type battery cell pressing member according to the present disclosure.
FIG. 2 is a partially enlarged view of FIG. 1.
FIG. 3 is a perspective view of a lower pressing portion of FIG. 1.
FIG. 4 is a graph illustrating a ratio of a thickness on a tab portion side to a thickness at a central portion of a battery cell.
FIG. 5 is a front view illustrating a state where the pouch-type battery cell pressing member of FIG. 1 presses a pouch-type battery cell.
FIG. 6 is a vertical cross-sectional view of a battery module according to the present disclosure.
FIG. 7 is a flowchart illustrating a pouch-type battery cell pressing method using the pouch-type battery cell pressing member.

Corresponding reference characters indicate corresponding components throughout the several views of the drawings. The drawing figures presented are illustrated for simplicity and clarity and have not necessarily been drawn to scale. For example, the dimensions of some of the elements in the figures may be exaggerated relative to other elements to help to improve understanding of various embodiments. Also, common but well-understood elements that are useful or necessary in a commercially feasible embodiment are often not depicted in order to facilitate a less obstructed view of these various embodiments.

### [Best Mode]

Hereinafter, embodiments will be described in detail with reference to the accompanying drawings so that those skilled in the art to which the present disclosure pertains may easily carry out the present disclosure. In describing the operational principles of embodiments of the present disclosure in detail, detailed descriptions of known functions or configurations that may unnecessarily obscure the gist of the present disclosure will be omitted.

Throughout the drawings, the same reference numerals are used for parts having similar functions and operations. In the present specification, when a part is described as being connected to another part, this includes not only a case where the part is directly connected, but also a case where the part is indirectly connected with another element interposed therebetween. In addition, unless otherwise stated, a description that a component includes another component does not exclude the presence of an additional component, but may further include other components.

Descriptions that limit or add to specify components, unless otherwise restricted, may be applied to all disclosures and are not limited to descriptions of specific disclosures.

Throughout the description and the claims of the present disclosure, unless otherwise specified, singular expressions also include plural cases.

Throughout the description and claims of the present disclosure, the term "or" includes "and" unless stated otherwise. Thus, "including A or B" means all three cases of including A, including B, and including both A and B.

A lithium secondary battery may exhibit a lithium plating phenomenon in which lithium ions are deposited on the surface of a negative electrode in the form of metallic lithium due to various causes during operation. This may cause deterioration in battery performance, reduction in capacity, shortening of lifespan, and, in severe cases, safety issues such as thermal runaway or short circuit.

An electrode of the lithium secondary battery includes a coated portion in which an electrode active material is coated on one or both surfaces of an electrode plate, and a non-coated portion in which the electrode active material is not coated. An electrode tab may be formed on the non-coated portion.

A manufacturing process of the electrode includes: coating the electrode active material on a portion of an electrode sheet in a rolled form except for a portion where the electrode tab is to be formed; drying and rolling the electrode active material; slitting the electrode sheet; and notching the slit electrode sheet into unit electrodes.

Before the coated portion of an electrode active material is dried, a phenomenon may occur in which the material flows down from the outer peripheral region, and such a region is referred to as a sliding portion. In the sliding portion, the electrode thickness is reduced, and as a result, when the electrode and the separator are stacked and laminated, a phenomenon may occur in which the electrode and the separator are not bonded and become lifted.

Such a phenomenon may, for example, reduce the migration rate of lithium ions passing through the separator, thereby forming a negative electrode overpotential, and may further accelerate the depletion of the electrolyte by exacerbating the imbalance in the concentration of a lithium salt contained in the electrolyte and promoting decomposition of the electrolyte. This results in lithium plating.

The sliding portion mainly occurs in a tab portion, which corresponds to the edge during coating of the electrode active material, and when electrodes having sliding portions are stacked to form an electrode assembly, the thickness on the tab portion side becomes thinner than that in the central portion. In addition, in a battery module formed by stacking a plurality of battery cells, the effect of such a thickness deviation becomes more pronounced. As charge and discharge cycles are repeated, the battery cells in the battery module gradually become thicker. Since the size of the frame in the battery module is fixed, the battery cells are subjected to gradually increasing pressure. However, due to the difference in thickness between the central portion and the tab portion side of the battery cell, the pressure applied to the tab portion side becomes smaller than that in the central portion. Such a pressing force deviation changes the migration rate of lithium ions depending on the position, resulting in lithium plating in the tab portion side.

Accordingly, in order to increase the thickness of the tab portion side, a method of controlling the width of the sliding portion by appropriately changing the shape of a coater or the coating conditions during electrode active material coating is used to prevent lithium plating from occurring in the tab portion side. However, there is a limitation in controlling the electrode thickness while also considering the N/P ratio, i.e., the ratio of the negative electrode to the positive electrode, which is another factor that may affect lithium plating.

In the related art, a method has been employed in which foam pads are interposed at both ends of a battery cell stack in which a plurality of battery cells are stacked, and/or between the plurality of battery cells. However, merely interposing foam pads makes it difficult to bring the positive electrode and the negative electrode into close contact with each other with a separator interposed therebetween at the sliding portion, and thus, it is difficult to effectively suppress an increase in resistance of the sliding portion.

In this regard, Chinese Utility Model Publication No. 221057607 relates to an end plate for a battery, in which the end plate for a battery includes an inner support portion, an outer support portion disposed in a first direction of the inner support portion, and an elastic member supported between the outer support portion and the inner support portion, and discloses that the end plate may effectively absorb expansion and displacement of a battery cell unit, thereby improving performance and lifespan of the battery by the elastic member providing a stable and uniform pressure to the battery cell through the inner support. However, Chinese Utility Model Publication No. 221057607 only discloses a configuration for stably and uniformly applying a pressing force to the entire battery cell, and does not present a technique for applying pressure so that the sliding portion receives the same pressure as the central portion.

In consideration of such aspects, the present disclosure provides a technique capable of applying pressure so that the sliding portion generated on the tab portion side of an electrode receives the same pressure as the central portion, thereby preventing or suppressing lithium plating and resistance increase.

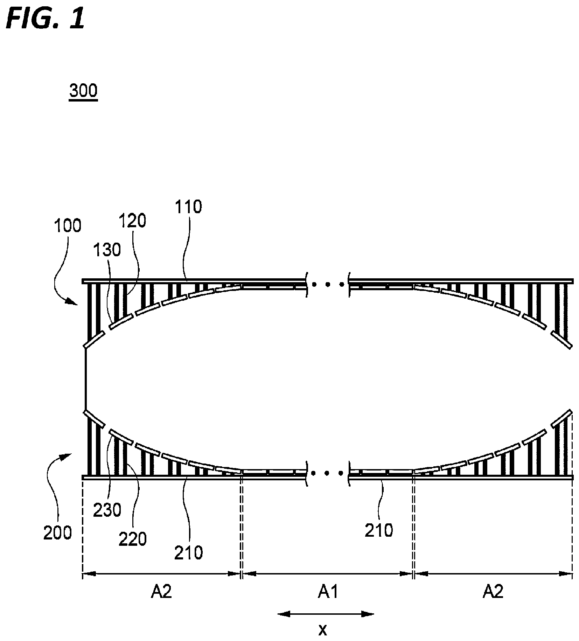

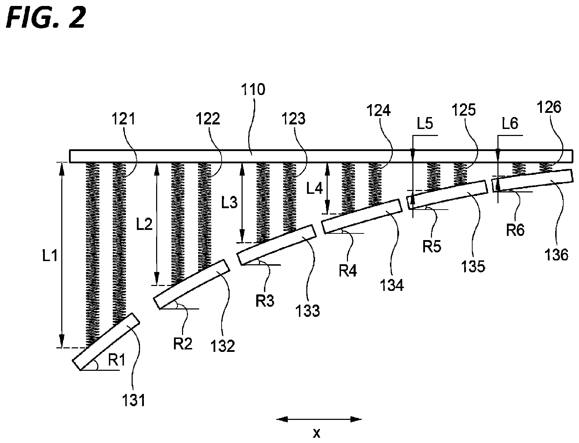

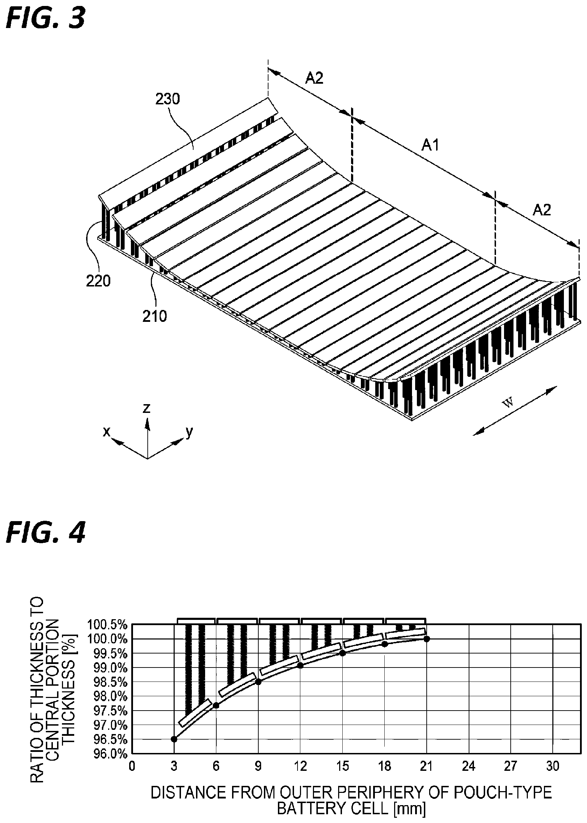

FIG. 1 is a front view of a pouch-type battery cell pressing member according to the present disclosure, FIG. 2 is an enlarged partial view of FIG. 1 (*e.g.,* FIG. 2 is an enlarged view of a second region of a first pressing portion of FIG. 1), FIG. 3 is a perspective view of a lower pressing portion of FIG. 1, and FIG. 4 is a graph illustrating a ratio of a thickness on a tab side to a thickness of a central portion of a battery cell.

Referring to FIGS. 1 to 4, the pouch-type battery cell pressing member 300 according to the present disclosure includes a first pressing part 100 including a first base plate 110, a first elastic member 120 having a first end coupled to the first base plate 110, and a plurality of first contact portions 130 coupled to a second end of the first elastic member 120, and a second pressing part 200 including a second base plate 210, a second elastic member 220 having a first end coupled to the second base plate 210, and a plurality of second contact portions 230 coupled to a second end of the second elastic member 220. The plurality of first contact portions 130 and the plurality of second contact portions 230 define a first region A1 where pressing surfaces are substantially parallel to the first base plate 110 and the second base plate 210, and a second region A2 where pressing surfaces are formed in an inclined shape with respect to the first base plate 110 and the second base plate 210.

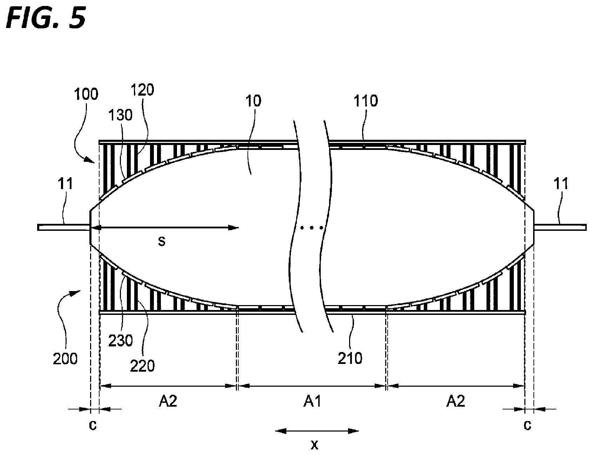

In the present disclosure, since the pressing surfaces of the plurality of first contact portions 130 and the plurality of second contact portions 230 are formed in an inclined shape in the second region A2 so as to correspond to an inclination of a sliding portion (*e.g*., s of FIG. 5) of the pouch-type battery cell, a pressing force on the sliding portion may be applied at the same level as a pressing force on a central portion of the pouch-type battery cell.

In addition, in the second region A2, the plurality of first contact portions 130 and the plurality of second contact portions 230 are formed such that an inclination angle increases toward both ends in a longitudinal direction x of the first base plate 110 or the second base plate 210. For example, in consideration of an inclination of the sliding portion of an electrode increasing toward both ends in the longitudinal direction x, the second region A2 pressing the sliding portion in the battery cell in which a plurality of electrodes are stacked is designed such that inclination angles R1, R2, R3, R4, R5, and R6 of the plurality of first contact portions 130 and the plurality of second contact portions 230 increase in a direction from R6 toward R1. Accordingly, the entire pressing surfaces of the plurality of first contact portions 130 and the plurality of second contact portions 230 are capable of pressing the sliding portion in a state of being in close contact with the sliding portion.

Lengths L1, L2, L3, L4, L5, and L6 of the first elastic member 120 and the second elastic member 220, which are coupled to the plurality of first contact portions 130 and the plurality of second contact portions 230, may become longer toward both ends in a longitudinal direction x of the first base plate 110 or the second base plate 210.

In order for the first elastic member 120 and the second elastic member 220 to apply the same pressing force to the pouch-type battery cell in the first region A1 and the second region A2, the compression degree of the first elastic members 121, 122, 123, 124, 125, and 126 is the same. In addition, in consideration of the thickness reduction caused by the sliding portion of the pouch-type battery cell, the lengths L1, L2, L3, L4, L5, and L6 of the first elastic member 120 and the second elastic member 220 may be configured to increase from L6 toward L1. When the lengths of the first elastic member 120 and the second elastic member 220 in the first region A1 are configured to be at the level of the first elastic member 126 in the second region A2 directly adjacent to the first region A1, the pressing force applied to the plurality of first contact portions 130 and the plurality of second contact portions 230 may be configured to be the same in the first region A1 and the second region A2.

In the meantime, when the first elastic member 120 and the second elastic member 220 press the plurality of first contact portions 130 and the plurality of second contact portions 230, in order for the pressing surfaces of the plurality of first contact portions 130 and the plurality of second contact portions 230 to stably come into close contact with the surface of the pouch-type battery cell, the plurality of first contact portions 130 and the plurality of second contact portions 230 are coupled with elastic members 120 and 220 arranged in two rows along a width direction y of the first base plate 110 or the second base plate 210.

A width of the sliding portion may vary depending on the viscosity of an electrode mixture slurry, a discharge amount of a coater that coats the electrode mixture slurry, a discharge speed, and a loading amount, and in consideration of the width of the sliding portion, the number and width of the plurality of first contact portions 130 and the plurality of second contact portions 230 disposed in the second region may be determined. In this case, the width of the plurality of first contact portions 130 and the plurality of second contact portions 230 refers to a length parallel to the direction x in FIGS. 1 and 2.

For example, in each second region A2 of the first pressing part 100 and the second pressing part 200, the number of the plurality of first contact portions 130 and the plurality of second contact portions 230 may be in a range of 3 to 10, and the width of the plurality of first contact portions 130 and the plurality of second contact portions 230 may be about 2 mm to 5 mm.

For example, when the inclination of the sliding portion is steep, the number of the contact portions tends to increase and the width tends to decrease, and when the inclination of the sliding portion is gentle, the number of the contact portions tends to decrease and the width tends to increase.

Referring to FIG. 4, a change in thickness from an outer peripheral end of the pouch-type battery cell to a central portion is illustrated. When the thickness of the central portion is set to 100%, the central portion thickness is reached when moving about 20 mm or more away from the outer peripheral end of the pouch-type battery cell. For example, the width of the sliding portion of the pouch-type battery cell may be considered to be about 20 mm. Although FIG. 4 illustrates a portion of the first pressing part, a shape symmetrical thereto may be applied to the second pressing part.

In the case of FIG. 4, when the width of the plurality of first contact portions 130 and the plurality of second contact portions 230 in the second region A2 is set to 3 mm, the plurality of first contact portions 130 and the plurality of second contact portions 230 may be configured to include six portions each.

In the meantime, in order for the first pressing part 100 and the second pressing part 200 to uniformly press an entire outer surface of the pouch-type battery cell, lengths w of the plurality of first contact portions 130 and lengths w of the plurality of second contact portions 230 may be configured to be equal to or greater than a full width (y-direction length) of the pouch-type battery cell 10.

FIG. 5 is a front view illustrating a state where the pouch-type battery cell pressing member 300 of FIG. 1 presses a pouch-type battery cell 10.

Referring to FIG. 5, the pouch-type battery cell pressing member 300 illustrated in FIGS. 1 to 3 is illustrated in a state of being disposed on the outer surface of the pouch-type battery cell 10, with a central portion of the pouch-type battery cell 10 omitted.

Generally, in an electrode assembly, a length and/or a width of the negative electrode is made greater than that of the positive electrode within a range of about 3 mm or less, and thus a portion where the positive electrode and the negative electrode substantially face each other starts from an inner side of an outermost side of the electrode assembly by a predetermined size c.

Accordingly, ends in the longitudinal direction x of the first base plate 110, which is a portion pressed by the pouch-type battery cell pressing member 300, and ends in the longitudinal direction x of the second base plate 210 may be located inward by the predetermined size c from an outer periphery in a direction in which an electrode lead 11 of the pouch-type battery cell 10 protrudes, and the predetermined size c may be in a range of more than 0 mm to 3 mm or less.

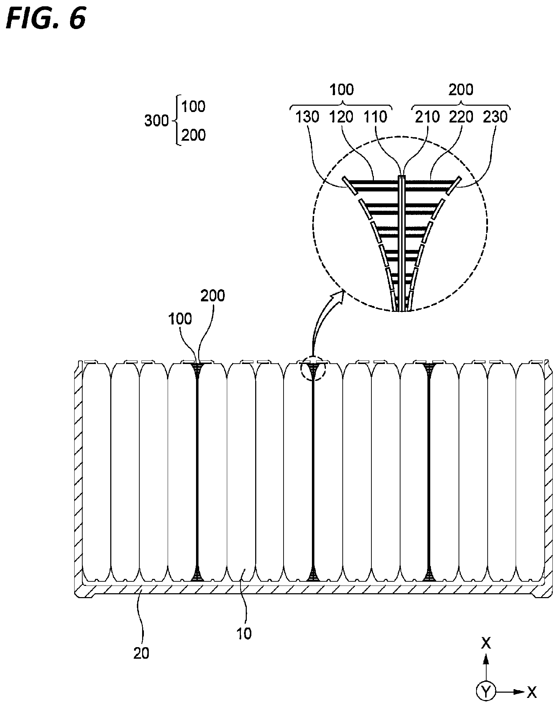

FIG. 6 is a vertical cross-sectional view of a battery module according to the present disclosure.

Referring to FIG. 6, the battery module includes a plurality of pouch-type battery cells 10, a pouch-type battery cell pressing member 300 interposed between the plurality of pouch-type battery cells 10, and a module case 20 that accommodates the plurality of pouch-type battery cells 10 and the pouch-type battery cell pressing member 300, and the pouch-type battery cell pressing member 300 may be interposed at one place each in two or more locations among spaces between the plurality of pouch-type battery cells 10. However, the pouch-type battery cell pressing member 300 may be interposed, for example, at one place each in one or more locations, or at one place each in three or more locations, as necessary.

The pouch-type battery cell pressing member 300 may be arranged such that an outer surface of the first base plate 110, to which the first elastic member 120 is not attached, faces an outer surface of the second base plate 210, to which the second elastic member 220 is not attached.

Although FIG. 6 illustrates a state where three pouch-type battery cell pressing members 300 are interposed between the plurality of pouch-type battery cells 10, the pouch-type battery cell pressing member 300 may also be interposed between a left end of the plurality of pouch-type battery cells 10 and the module case 20, and/or between a right end of the plurality of pouch-type battery cells 10 and the module case 20. In this case, the pouch-type battery cell pressing member 300 may be in a form including only the first pressing part 100 or only the second pressing part 200.

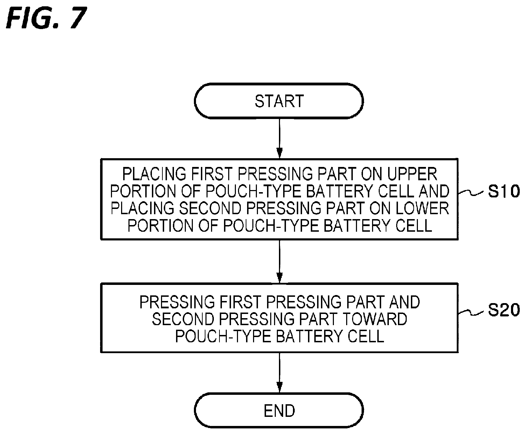

Referring to FIG. 7, a pouch-type battery cell pressing method using the pouch-type battery cell pressing member 300 of the present disclosure, includes a first step S10 of placing the first pressing part 100 on an upper portion of the pouch-type battery cell 10 and placing the second pressing part 200 on a lower portion of the pouch-type battery cell 10, and a second step S20 of pressing the first pressing part 100 and the second pressing part 200 toward the pouch-type battery cell 10. In the second step, pressing of the first region A1 and pressing of the second region A2 may be performed simultaneously. According to another embodiment, the pressing of the first region A1 and the pressing of the second region A2 in the second step S20 may be performed with a time difference.

In one embodiment, the second step may be performed by continuously pressing the entire first base plate 110 and the entire second base plate 210 with a uniform force for a period of about 2 seconds or more to 10 minutes or less, for example, by continuously pressing for a period of about 10 seconds or more to 1 minute or less, or for a period of about 20 seconds or more to 30 seconds or less.

In addition, the second step may be performed by repeating pressing and releasing pressing two or more times, so that the positive electrode and the negative electrode may increase adhesion in the sliding portion.

In another embodiment, the second step may include continuously pressing the first region A1 with a uniform force for a period of about 2 seconds or more to 10 minutes or less, and applying vibration to the second region A2 while in a pressed state. For example, the pressing time of the first region A1 and the second region A2 may be about 10 seconds or more to 1 minute or less, and, for example, may be about 20 seconds or more to 30 seconds or less.

The vibration may be, for example, ultrasonic vibration, and by applying vibration in this manner, the pressing force may be uniformly applied to the entire sliding portion, thereby preventing or suppressing occurrence of a local pressing force imbalance in the sliding portion.

Those skilled in the art to which the present disclosure pertains may be able to make various applications and modifications within the scope of the present disclosure based on the above description.

In the present specification, terms indicating directions such as upper, lower, left, right, front, and rear are used. However, it will be apparent to those skilled in the art of the present disclosure that such terms are merely for convenience of description and may vary depending on the position of an object or the position of an observer.

While the present disclosure has been described using limited embodiments and drawings, the present disclosure is not limited thereto, and it may be appreciated that various modifications and changes may be made by those having ordinary skill in the art of the present disclosure within the technical idea of the present disclosure and the equitable scope of the claims set forth below.

## Claims

1. A pouch-type battery cell pressing assembly comprising:
a first pressing part including a first base plate, a first elastic portion having a first end coupled to the first base plate, and a plurality of first contact portions coupled to a second end of the first elastic portion, and
a second pressing part including a second base plate, a second elastic portion having a first end coupled to the second base plate, and a plurality of second contact portions coupled to a second end of the second elastic portion,
wherein the plurality of first contact portions and the plurality of second contact portions define a first region where pressing surfaces are substantially parallel to the first base plate and the second base plate, and a second region where pressing surfaces are formed in an inclined shape with respect to the first base plate and the second base plate.

2. The pouch-type battery cell pressing assembly according to claim 1, wherein, in the second region, the plurality of first contact portions and the plurality of second contact portions are formed such that an inclination angle increases toward both longitudinal ends of the first base plate or the second base plate.

3. The pouch-type battery cell pressing assembly according to claim 2, wherein lengths of the first elastic portion and the second elastic portion coupled to the plurality of first contact portions and the plurality of second contact portions increase toward both longitudinal ends of the first base plate or the second base plate.

4. The pouch-type battery cell pressing assembly according to claim 1, wherein the plurality of first contact portions and the plurality of second contact portions have elastic portions coupled thereto that are arranged in two rows along a width direction of the first base plate or the second base plate.

5. The pouch-type battery cell pressing assembly according to claim 2, wherein, in each second region, the number of the plurality of first contact portions and the plurality of second contact portions is in a range of 3 to 10.

6. The pouch-type battery cell pressing assembly according to claim 1, wherein longitudinal ends of the first base plate and longitudinal ends of the second base plate are positioned inward by more than about 0 mm to 3 mm or less from an outer periphery of the pouch-type battery cell in a direction in which electrode leads protrude.

7. The pouch-type battery cell pressing assembly according to claim 1, wherein widths of the plurality of first contact portions and the plurality of second contact portions are about 2 mm to 5 mm.

8. The pouch-type battery cell pressing assembly according to claim 7, wherein widths of the plurality of first contact portions and the plurality of second contact portions are about 3 mm.

9. The pouch-type battery cell pressing assembly according to claim 1, wherein lengths of the plurality of first contact portions and the plurality of second contact portions are configured to be equal to or greater than a width of the pouch-type battery cell.

10. A battery module comprising:
a plurality of pouch-type battery cells;
the pouch-type battery cell pressing assembly of claim 1 interposed between the plurality of pouch-type battery cells; and
a module case accommodating the plurality of pouch-type battery cells and the pouch-type battery cell pressing assembly,
wherein the pouch-type battery cell pressing assembly is interposed at one place in two or more locations among spaces between the plurality of pouch-type battery cells.

11. The battery module according to claim 10, wherein the pouch-type battery cell pressing assembly is arranged such that an outer surface of the first base plate, to which the first elastic portion is not attached, faces an outer surface of the second base plate, to which the second elastic portion is not attached.

12. A pouch-type battery cell pressing method comprising:
providing the pouch-type battery cell pressing assembly of claim 1;
placing the first pressing part on an upper portion of the pouch-type battery cell and placing the second pressing part on a lower portion of the pouch-type battery cell; and
pressing the first pressing part and the second pressing part toward the pouch-type battery cell,
wherein the pressing is performed such pressing of the first region and pressing of the second region are carried out simultaneously.

13. The pouch-type battery cell pressing method according to claim 12, wherein the pressing is performed by continuously pressing an entirety of the first base plate and the second base plate with a uniform force for a period of about 2 seconds or more and 10 minutes or less.

14. The pouch-type battery cell pressing method according to claim 13, wherein the pressing is performed by repeating pressing and releasing pressing two or more times.

15. The battery cell pressing method according to claim 12, wherein the pressing includes continuously pressing the first region with a uniform force for a period of about 2 seconds or more and 10 minutes or less, and applying vibration to the second region while in a pressed state.

16. The battery cell pressing method according to claim 15, wherein the vibration is ultrasonic vibration.
